# EUROPÄISCHE PATENTSCHRIFT

(11) **EP 2 178 714 B1**
(45) Veröffentlichungstag und Bekanntmachung des Hinweises auf die Patenterteilung: **19.09.2012**
(21) Anmeldenummer: 08787038.2
(22) Anmeldetag: 08.08.2008
(51) Int. Cl.: F16H 61/04, B60W 30/19, B60W 10/11, B60W 20/00, B60L 11/00, B60W 10/02, B60W 10/08

(54) **VERFAHREN ZUR DURCHFÜHRUNG EINER LASTSCHALTUNG BEI FAHRZEUGEN MIT ELEKTRISCHEM ANTRIEB**
METHOD FOR CARRYING OUT A LOAD SHIFT IN VEHICLES WITH ELECTRIC DRIVE
PROCÉDÉ POUR EFFECTUER UN CHANGEMENT DE VITESSE EN CHARGE POUR DES VÉHICULES À PROPULSION ÉLECTRIQUE

(30) Priorität: 16.08.2007 DE 102007038775
(43) Veröffentlichungstag der Anmeldung: 28.04.2010
(73) Patentinhaber: ZF Friedrichshafen AG, 88038 Friedrichshafen (DE)
(72) Erfinder: KALTENBACH, Johannes, 88048 Friedrichshafen (DE); WALLNER, Stefan, 6900 Bregenz (AT)
(86) Internationale Anmeldenummer: PCT/EP2008/060443
(87) Internationale Veröffentlichungsnummer: WO 2009/021916

(56) Entgegenhaltungen:
- EP-A- 1 450 074
- EP-A- 1 744 083
- DE-A1- 10 327 306
- DE-C1- 19 631 983
- US-A- 4 021 712

## Beschreibung

Die vorliegende Erfindung bezieht sich auf ein Verfahren zur Durchführung einer Lastschaltung bei Elektrofahrzeugen umfassend ein Lastschaltgetriebe bzw. bei Hybridfahrzeugen umfassend ein Hybridgetriebe im rein elektrischen Fahrbetrieb gemäß dem Oberbegriff des Patentanspruchs 1.

Aus dem Stand der Technik sind Hybridfahrzeuge umfassend ein Hybridgetriebe bekannt. Sie umfassen zusätzlich zu dem Verbrennungsmotor zumindest einen Elektromotor bzw. eine elektrische Maschine. Bei seriellen Hybridfahrzeugen wird ein Generator vom Verbrennungsmotor angetrieben, wobei der Generator den die Räder antreibenden Elektromotor mit elektrischer Energie versorgt. Des weiteren sind parallele Hybridfahrzeuge bekannt, bei denen eine Addition der Drehmomente des Verbrennungsmotors und zumindest einer mit dem Verbrennungsmotor verbindbaren elektrischen Maschine erfolgt. Hierbei sind die elektrischen Maschinen mit dem Riementrieb oder mit der Kurbelwelle des Verbrennungsmotors verbindbar. Die vom Verbrennungsmotor und/oder der zumindest einen elektrischen Maschine erzeugten Drehmomente werden über ein nachgeschaltetes Getriebe an die angetriebene Achse übertragen.

Das gattungsbildende Dokument US4021712 offenbart ein Verfahren zur Durchführung einer Schaltung bei Elektrofahrzeugen umfassend ein Lastschaltgetriebe mit den Merkmale des Oberbegriffs von Anspruch 1.

Beispielsweise ist im Rahmen der DE102006019679 A1 ein Antriebsstrang mit einem elektrisch verstellbaren Hybridgetriebe und einem elektrohydraulischen Steuersystem, mehreren elektrischen Leistungseinheiten und mehreren Drehmomentübertragungsmechanismen bekannt. Hierbei können die Drehmomentübertragungsmechanismen durch das elektrohydraulische Steuersystem selektiv eingerückt werden, um vier Vorwärtsgänge, einen neutralen Zustand, eine elektrische Betriebsart mit niedriger und hoher Drehzahl, eine elektrisch verstellbare Betriebsart mit niedriger und hoher Drehzahl und eine Berghalte-Betriebsart bereitzustellen.

Aus der DE 102005057607 B3 ist ein Hybridantrieb für Fahrzeuge bekannt, zumindest beinhaltend einen Hauptmotor, insbesondere eine Brennkraftmaschine, einen Generator, einen Elektromotor und ein, ein Sonnenrad, ein Hohlrad, einen Planetenträger sowie Planetenräder aufweisendes Planetengetriebe, das mindestens eine Abtriebswelle beinhaltet. Hierbei ist vorgesehen, dass für einen ersten Fahrbereich des Fahrzeuges zur Addition der Drehmomente die Antriebswellen des Hauptmotors und des Elektromotors auf das Sonnenrad des Planetengetriebes gekoppelt sind und für einen weiteren Fahrbereich einer der beiden Motoren zur mechanischen Addition der Drehzahlen entsprechend dem Überlagerungsprinzip kraftschlüssig auf das Hohlrad des Planetengetriebes koppelbar ist.

Bei einer nach dem Stand der Technik durchgeführten Lastschaltung erfolgt die zur Synchronisierung auf den neuen Gang erforderliche Drehzahlanpassung des Motors mit Hilfe der beteiligten Schaltelemente und eines Motor-Momenteingriffes.

Beispielsweise wird bei einer Zug -Hochschaltung zunächst die Übertragungsfähigkeit des zuschaltenden Schaltelementes zur Lastübernahme erhöht und gleichzeitig die Übertragungsfähigkeit des abschaltenden Schaltelementes verringert, wobei nach erfolgter Lastübernahme durch das zuschaltende Schaltelement eine Drehzahlanpassung des Motors mit Hilfe der Schaltelemente und eines Motor-Momenteingriffes erfolgt. Bei einer rein elektrischen Lastschaltung wird die Drehzahl der elektrischen Maschine angepasst; des weiteren wird der Momenteingriff an der elektrischen Maschine durchgeführt. Anschlie-βend wird das abschaltende Schaltelement vollständig geöffnet und das zuschaltende Schaltelement vollständig geschlossen.

Nach dem Stand der Technik bleibt die elektrische Maschine bei derartigen Lastschaltungen während der Schaltung unter Vorgabe eines Fahrsollmomentes momentgeführt und es erfolgt ein Momenteingriff seitens der Schaltablaufsteuerung.

Der vorliegenden Erfindung liegt die Aufgabe zugrunde, ein Verfahren zur Durchführung einer Lastschaltung bei Elektrofahrzeugen umfassend ein Lastschaltgetriebe bzw. bei Hybridfahrzeugen umfassend ein Hybridgetriebe im rein elektrischen Fahrbetrieb anzugeben, durch dessen Durchführung die Schaltzeiten verkürzt und der Schaltkomfort erhöht wird.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird vorgeschlagen, die zur Synchronisierung auf den neuen Gang erforderliche Drehzahlanpassung der elektrischem Maschine in einem Drehzahlregelmodus durchzuführen, wobei die elektrische Maschine drehzahlgeregelt auf die Zieldrehzahl bzw. die Anschlussdrehzahl (Synchrondrehzahl) des neuen Ganges geführt wird, so dass das zuschaltende Schaltelement synchronisiert wird.

Gemäß der Erfindung ist der Drehzahlverlauf derart gestaltet, dass die Drehzahl der elektrischen Maschine mit einem geringen Gradienten auf die Zieldrehzahl einläuft. Die zur elektrischen Maschine hin wirkenden Momente der Schaltelemente dienen in vorteilhafter Weise als Vorsteuerung für die Drehzahlregelung an der elektrischen Maschine.

Während dieser Drehzahlregelphase bestimmen die Momente an den Schaltelementen das Abtriebsmoment, da sie sich im Schlupf befinden und dem Fahrsollmoment nachgeführt werden.

Wenn die Drehzahl der elektrischen Maschine die Zieldrehzahl bzw. die Synchrondrehzahl des zuschaltenden Ganges erreicht, wird die Maschine wieder in den momentengeregelten Modus überführt und das zuschaltende Schaltelement vollständig geschlossen. Nach Abschluss der Lastschaltung ist die elektrische Maschine über den neuen Getriebegang mit dem Abtrieb des Getriebes gekoppelt.

Durch die erfindungsgemäße Konzeption werden die Schaltzeiten verkürzt, da eine elektrische Maschine präzise und dynamisch drehzahlregelbar ist. Des weiteren wird durch den sanften Einlauf der Drehzahl der elektrischen Maschine auf die Zieldrehzahl bzw. die Synchrondrehzahl des neuen Ganges ein besonders hoher Schaltkomfort gewährleistet, da die Änderung des dynamischen Moments der elektrischen Maschine, verursacht durch das Massenträgheitsmoment de Maschine, in dem Augenblick, in dem das zuschaltende Schaltelement ins Haften kommt, nur eine geringe Änderung erfährt.

Ein weiterer Vorteil des erfindungsgemäßen Verfahrens besteht darin, dass der Ablauf der Lastschaltung einfacher umzusetzen und abzustimmen ist, verglichen mit einer Lastschaltung mit einem Momenteingriff gemäß dem Stand der Technik.

Die Erfindung wird im folgenden anhand der beigefügten Figuren beispielhaft näher erläutert. Es zeigen:
- Figur 1:: Eine beispielhafte, schematische und vereinfachte Darstellung des Antriebsstrangs eines parallelen Hybridfahrzeugs; und
- Figur 2:: Ein Diagramm, welches den Verlauf der Drehzahl des Elektromotors bei einer erfindungsgemäßen Zug-Hochschaltung veranschaulicht.

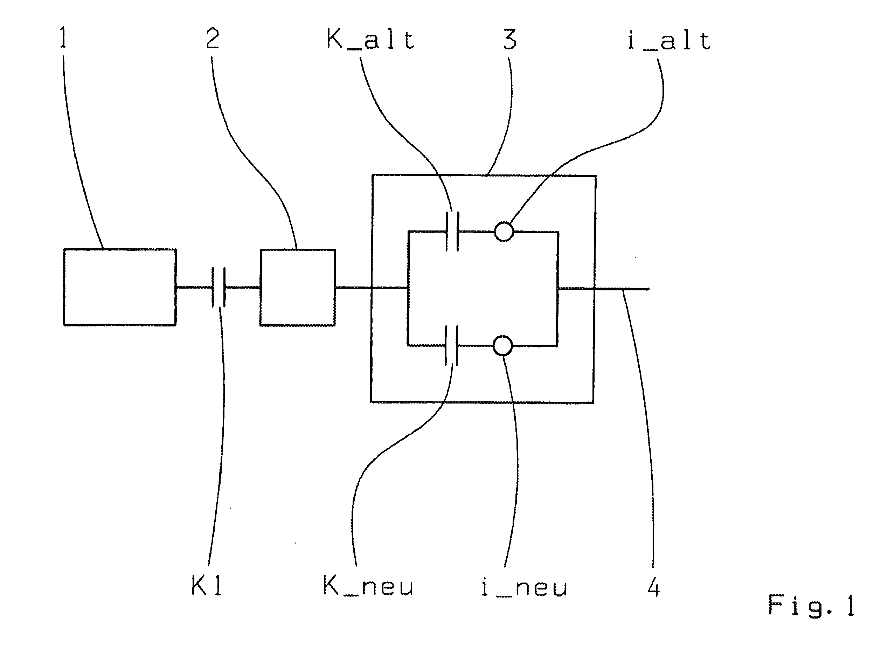

Bezugnehmend auf Figur 1 umfasst der Antriebsstrang eines parallelen Hybridfahrzeugs einen Verbrennungsmotor 1 und zumindest eine elektrische Maschine 2, die in dieser Reihenfolge hintereinander geschaltet sind, wobei der Verbrennungsmotor 1 durch Öffnen einer Kupplung K1 von der elektrischen Maschine 2 und somit vom Antriebsstrang abkoppelbar ist. In Figur 1 ist der Abtrieb des Lastschaltgetriebes 3 mit dem Bezugszeichen 4 versehen.

In Kraftflussrichtung nach der elektrischen Maschine 2 ist ein Lastschaltgetriebe 3 angeordnet, welches bei der gezeigten beispielhaften vereinfachten Darstellung, die der Veranschaulichung des erfindungsgemäßen Verfahrens dient, eine zuschaltende Kupplung K_neu für den neuen einzulegenden Gang und eine abschaltende Kupplung K_alt für den alten Gang umfasst, wobei jeder Kupplung bzw. jedem Gang eine Übersetzungsstufe mit der Übersetzung i_neu bzw. i_alt zugeordnet ist. In Figur 1 ist der Abtrieb des Lastschaltgetriebes 3 mit dem Bezugszeichen 4 versehen.

Zu Beginn des erfindungsgemäßen Verfahrens ist der Verbrennungsmotor 1 entweder abgeschaltet oder befindet sich im Leerlauf, wobei die Kupplung K1 offen ist. Da die Lastschaltung gemäß der Erfindung bei offener Kupplung K1 durchgeführt wird, ist das Verfahren in vorteilhafter Weise auch bei reinen Elektrofahrzeugen, die ein Lastschaltgetriebe umfassen, anwendbar. Im folgenden wird das erfindungsgemäße Verfahren anhand einer Zug-Hochschaltung von i_alt nach i_neu beschrieben.

Gemäß der Erfindung wird zunächst die Übertragungsfähigkeit der zuschaltenden Kupplung K_neu zur Lastübernahme erhöht und gleichzeitig die Übertragungsfähigkeit der abschaltenden Kupplung K_alt verringert. Nach erfolgter Lastübernahme durch die Kupplung K_neu wird die elektrische Maschine 2 in einen Drehzahlregelmodus überführt und es wird in diesem Modus eine Drehzahlanpassung der elektrischen Maschine 2 durchgeführt, wobei die elektrische Maschine 2 drehzahlgeregelt auf die Zieldrehzahl bzw. die Synchrondrehzahl des neuen Ganges geführt wird; gleichzeitig wird das abschaltende Schaltelement K_alt vollständig geöffnet.

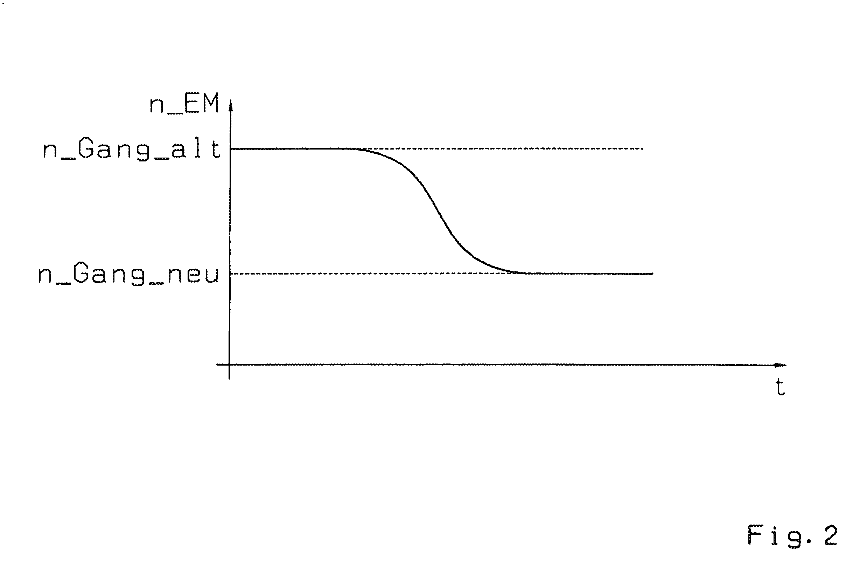

In vorteilhafter Weise ist der Drehzahlverlauf bei der Drehzahlanpassung der elektrischen Maschine 2 im Drehzahlregelmodus derart gestaltet, dass die Drehzahl mit einem geringen Gradient auf die Zieldrehzahl bzw. die Anschlussdrehzahl des neuen Ganges einläuft, wobei die zur elektrischen Maschine 2 hin wirkenden Momente der Kupplungen K_alt, K_neu als Vorsteuerung für die Drehzahlregelung dienen. Ein beispielhafter Verlauf der Solldrehzahl der elektrischen Maschine 2 n_EM als Funktion der Zeit t ist Gegenstand der Figur 2. Hierbei bezeichnet n_Gang_alt die Drehzahl der elektrischen Maschine 2 bei eingelegtem alten Gang (d.h. bei geschlossener Kupplung K_alt); n_Gang_neu ist die Synchrondrehzahl des neuen Ganges bei der durchzuführenden Lastschaltung.

Wenn anschließend die Drehzahl die Synchrondrehzahl n_Gang_neu erreicht, wird die elektrische Maschine 2 in den momentengeregelten Modus überführt und die Kupplung K_neu vollständig geschlossen, so dass die elektrische Maschine 2 über den neuen Getriebegang mit dem Abtrieb des Getriebes gekoppelt ist.

Bei einer Zug-Rückschaltung wird zunächst die Übertragungsfähigkeit der abschaltenden Kupplung K_alt reduziert, wobei sobald Schlupf an K_alt erkannt wird, die elektrische Maschine 2 vom momentgeführten Modus in einen Drehzahlregelmodus überführt wird. Anschließend wird die Drehzahl der elektrischen Maschine 2 erhöht bis auf eine Drehzahl oberhalb der Synchrondrehzahl an der zuschaltenden Kupplung K_neu, da an K_neu eine positive Drehzahldifferenz erforderlich ist, damit diese Kupplung ein Zug-Moment übertragen kann.

In einem nächsten Schritt wird die Übertragungsfähigkeit der zuschaltenden Kupplung K_neu erhöht und die Übertragungsfähigkeit der abschaltenden Kupplung K_alt weiter verringert, so dass eine kontinuierliche Lastübernahme durch K_neu realisiert wird. Nach erfolgter Lastübernahme durch die zuschaltende Kupplung K_neu wird die abschaltende Kupplung K_alt ganz geöffnet und die Drehzahl der elektrischen Maschine im Drehzahlregelmodus auf die Synchrondrehzahl an der zuschaltenden Kupplung K_neu geführt. Wenn die Synchrondrehzahl erreicht wird, wird die elektrische Maschine wieder in den momentgeregelten Modus überführt und die zuschaltende Kupplung K_neu ganz geschlossen.

Für den Fall einer Schub-Rückschaltung wird zunächst zur Lastübernahme die Übertragungsfähigkeit der zuschaltenden Kupplung K_neu erhöht, wobei gleichzeitig die Übertragungsfähigkeit der abschaltenden Kupplung K_alt verringert wird. Nach der Lastübernahme durch K_neu wird die elektrische Maschine vom momentgeführten Modus in einen Drehzahlregelmodus überführt und die abschaltende Kupplung K_alt ganz geöffnet. Anschließend wird die elektrische Maschine drehzahlgeregelt auf die Synchrondrehzahl geführt, wobei vorzugsweise die Drehzahl mit einem geringen Gradienten auf die Zieldrehzahl einläuft. Wenn die Synchrondrehzahl erreicht wird, wird die elektrische Maschine wieder in den momentgeregelten Modus überführt und die zuschaltende Kupplung K_neu ganz geschlossen

Eine Schub-Hochschaltung und eine Zug-Rückschaltung sind im prinzipiellen Ablauf ähnlich, mit dem Unterschied, dass die Vorzeichen der Drehmomente verschieden sind und der Drehzahlverlauf in die andere Richtung geht. Demnach wird bei einer Schub-Hochschaltung zunächst die Übertragungsfähigkeit der abschaltenden Kupplung K_alt kontinuierlich verringert, wobei sobald Schlupf an K_alt erkannt wird, die elektrische Maschine vom momentgeführten Modus in einen Drehzahlregelmodus überführt wird, in dem die Drehzahl bis auf eine Drehzahl unterhalb der Synchrondrehzahl am zuschaltenden Schaltelement K_neu erniedrigt wird, da eine negative Drehzahldifferenz erforderlich ist, damit das zuschaltende Schaltelement Moment übertragen kann. Anschließend wird die Übertragungsfähigkeit des zuschaltenden Schaltelementes K_neu erhöht und die Übertragungsfähigkeit des abschaltenden Schaltelementes K_alt verringert, so dass eine kontinuierliche Lastübernahme durch K_neu realisiert wird.

Nach erfolgter Lastübernahme durch die zuschaltende Kupplung K_neu wird die abschaltende Kupplung K_alt ganz geöffnet und die Drehzahl der elektrischen Maschine im Drehzahlregelmodus auf die Synchrondrehzahl an der zuschaltenden Kupplung K_neu geführt. Wenn die Synchrondrehzahl erreicht wird, wird die elektrische Maschine wieder in den momentgeregelten Modus überführt und die zuschaltende Kupplung K_neu ganz geschlossen.

### Bezugszeichen

- 1: Verbrennungsmotor
- 2: elektrische Maschine
- 3: Lastschaltgetriebe
- 4: Abtrieb des Lastschaltgetriebes

- K1: Kupplung
- K_neu: Kupplung
- K_alt: Kupplung
- n_EM: Drehzahl der elektrischen Maschine
- n_Gang_alt: Drehzahl der elektrischen Maschine bei eingelegtem alten Gang
- n_Gang_neu: Synchrondrehzahl des neuen Ganges
- i-alt: Übersetzung
- i_neu: Übersetzung

## Patentansprüche

1. Verfahren zur Durchführung einer Lastschaltung bei Elektrofahrzeugen umfassend ein Lastschaltgetriebe bzw. bei Hybridfahrzeugen umfassend ein Hybridgetriebe im rein elektrischen Fahrbetrieb, wobei die zur Synchronisierung auf den neuen Gang erforderliche Drehzahlanpassung der elektrischen Maschine (2) in einem Drehzahlregelmodus durchgeführt wird, wobei wenn die Drehzahl (n_EM) der elektrischen Maschine (2) die Zieldrehzahl bzw. die Synchrondrehzahl (n_Gang_neu) des zuschaltenden Ganges erreicht, die elektrische Maschine (2) in den momentengeregelten Modus überführt wird und das zuschaltende Schaltelement (K_neu) vollständig geschlossen wird, **dadurch gekennzeichnet dass**
für den Fall einer Zug-Hochschaltung die Übertragungsfähigkeit der zuschaltenden Kupplung (K_neu) zur Lastübernahme erhöht und gleichzeitig die Übertragungsfähigkeit der abschaltenden Kupplung (K_alt) verringert wird, wobei nach erfolgter Lastübernahme durch das zuschaltende Schaltelement (K_neu) die elektrische Maschine (2) in einen Drehzahlregelmodus überführt wird und eine Drehzahlanpassung der elektrischen Maschine (2) durchgeführt wird, um die Synchrondrehzahl des zu schaltenden Ganges zu erreichen, so dass die elektrische Maschine (2) drehzahlgeregelt auf die Zieldrehzahl bzw. die Synchrondrehzahl des neuen Ganges geführt wird, wobei gleichzeitig das abschaltende Schaltelement (K_alt) vollständig geöffnet wird, wobei für den Fall einer Zug-Rückschaltung die Übertragungsfähigkeit des abschaltenden Schaltelementes (K_alt) verringert wird, wobei sobald Schlupf am abschaltenden Schaltelement (K_alt) erkannt wird, die elektrische Maschine (2) vom momentgeführten Modus in einen Drehzahlregelmodus überführt wird, wobei anschließend die Drehzahl der elektrischen Maschine (2) bis auf eine Drehzahl oberhalb der Synchrondrehzahl am zuschaltenden Schaltelement (K_neu) erhöht wird, wobei in einem nächsten Schritt die Übertragungsfähigkeit des zuschaltenden Schaltelementes (K_neu) erhöht und die Übertragungsfähigkeit des abschaltenden Schaltelementes (K_alt) weiter verringert wird, so dass eine kontinuierliche Lastübernahme durch das zuschaltende Schaltelement (K_neu) realisiert wird, wobei nach erfolgter Lastübernahme durch das zuschaltende Schaltelement (K_neu) das abschaltende Schaltelement (K_alt) ganz geöffnet und die Drehzahl der elektrischen Maschine (2) auf die Synchrondrehzahl am zuschaltenden Schaltelement (K_neu) geführt wird,
wobei für den Fall einer Schub-Rückschaltung die Übertragungsfähigkeit des zuschaltenden Schaltelementes (K_neu) erhöht wird, wobei gleichzeitig die Übertragungsfähigkeit der abschaltenden Kupplung (K_alt) verringert wird, wobei nach der Lastübernahme durch das zuschaltende Schaltelement (K_neu) die elektrische Maschine (2) vom momentgeführten Modus in einen Drehzahlregelmodus überführt und das abschaltende Schaltelement (K_alt) ganz geöffnet wird und wobei anschließend die elektrische Maschine (2) drehzahlgeregelt auf die Synchrondrehzahl geführt wird, wobei gleichzeitig das abschaltende Schaltelement (K_alt) vollständig geöffnet wird und
wobei für den Fall einer Schub-Hochschaltung zunächst die Übertragungsfähigkeit des abschaltenden Schaltelementes (K_alt) kontinuierlich verringert wird, wobei sobald am abschaltenden Schaltelement (K_alt) Schlupf erkannt wird, die elektrische Maschine (2) vom momentgeführten Modus in einen Drehzahlregelmodus überführt wird, in dem die Drehzahl bis auf eine Drehzahl unterhalb der Synchrondrehzahl am zuschaltenden Schaltelement (K_neu) erniedrigt wird, wobei anschließend die Übertragungsfähigkeit des zuschaltenden Schaltelementes (K_neu) erhöht und die Übertragungsfähigkeit des abschaltenden Schaltelementes (K_alt) verringert wird, so dass eine kontinuierliche Lastübernahme durch (K_neu) realisiert wird und wobei nach erfolgter Lastübernahme durch das zuschaltende Schaltelement (K_neu) das abschaltende Schaltelement (K_alt) ganz geöffnet wird und die Drehzahl der elektrischen Maschine (2) im Drehzahlregelmodus auf die Synchrondrehzahl am zuschaltenden Schaltelement (K_neu) geführt wird.

2. Verfahren zur Durchführung einer Lastschaltung nach Anspruch 1,
**dadurch gekennzeichnet, dass** die zur elektrischen Maschine (2) hin wirkenden Momente der Schaltelemente (K_alt, K_neu) als Vorsteuerung für die Drehzahlregelung an der elektrischen Maschine (2) dienen.

## Claims

1. Method for carrying out a load shift in electric vehicles having a load shift transmission, or in hybrid vehicles having a hybrid transmission during purely electric driving operation, wherein the speed adaptation of the electric machine (2) required for synchronization to the new gear is carried out in a speed regulation mode, the electric machine (2) being transferred to the torque-controlled mode when the speed (n_EM) of the electric machine (2) reaches the target speed or the synchronous speed (n_Gang_neu) of the gear to be engaged and the engaging shifting element (K_neu) is fully engaged,
**characterized in that**, in the case of a traction upshift the transmission capacity of the engaging clutch (K_neu) is increased in order to assume the load and the transmission capacity of the disengaging clutch (K_alt) is simultaneously reduced, the electric machine (2) being transferred to a speed regulation mode after the load has been assumed by the engaging shifting element (K_neu) and a speed adaptation of the electric machine (2) being carried out in order to reach the synchronous speed of the gear to be engaged, so that the electric machine (2) is adjusted in a speed-regulated manner to the target speed or the synchronous speed of the new gear while simultaneously the disengaging shifting element (K_alt) is fully disengaged; wherein, in the case of a traction downshift the transmission capacity of the disengaging shifting element (K_alt) is reduced and, as soon as slip is detected at the disengaging shifting element (K_alt), the electric machine (2) is transferred from the torque-controlled mode to a speed regulation mode and the speed of the electric machine (2) is then increased to a speed above the synchronous speed of the engaging shifting element (K_neu); wherein, in a next step the transmission capacity of the engaging shifting element (K_neu) is increased and the transmission capacity of the disengaging shifting element (K_alt) is further reduced, so that a continuous take-up of load by the engaging shifting element (K_neu) is achieved; wherein, after the load has been assumed by the engaging shifting element (K_neu), the disengaging shifting element (K_alt) is fully disengaged and the speed of the electric machine (2) is adjusted to the synchronous speed at the engaging shifting element (K_neu),
wherein, in the case of a coast downshift, the transmission capacity of the engaging shifting element (K_neu) is increased while the transmission capacity of the disengaging clutch (K_alt) is simultaneously reduced; wherein, after the load has been assumed by the engaging shifting element (K_neu) the electric machine (2) is transferred from the torque-controlled mode to a speed regulation mode and the disengaging shifting element (K_alt) is fully disengaged, the electric machine (2) then being adjusted to the synchronous speed in a speed-regulated manner while at the same time the disengaging shifting element (K_alt) is fully disengaged; and wherein, in the case of a coast upshift, the transmission capacity of the disengaging shifting element (K_alt) is first continuously reduced and, as soon as slip is detected at the disengaging shifting element (K_alt), the electric machine (2) is transferred from the torque-controlled mode to a speed regulation mode in which the speed is lowered to a speed below the synchronous speed at the engaging shifting element (K_neu), the transmission capacity of the engaging shifting element (K_neu) then being increased and the transmission capacity of the disengaging shifting element (K_alt) being reduced, so that a continuous take-up of load by (K_neu) is achieved, and wherein, after the load has been assumed by the engaging shifting element (K_neu), the disengaging shifting element (K_alt) is fully disengaged and the speed of the electric machine (2) is adjusted in the speed regulation mode to the synchronous speed at the engaging shifting element (K_neu).

2. Method for carrying out a load shift according to Claim 1, **characterized in that** the torques of the shifting elements (K_alt, K_neu) acting in the direction of the electric machine (2) serve as a pilot control for the speed regulation at the electric machine (2).

## Revendications

1. Procédé pour effectuer un changement de vitesses en charge pour des véhicules à propulsion électrique, comprenant une transmission à changement de vitesses en charge ou, dans le cas de véhicules hybrides, comprenant une transmission hybride en mode de conduite purement électrique, l'adaptation du régime de la machine électrique (2) nécessaire pour la synchronisation au nouveau rapport étant effectuée dans un mode à régulation de régime, et lorsque le régime (n_EM) de la machine électrique (2) atteint le régime cible ou le régime synchrone (n_Gang_neu) du rapport à enclencher, la machine électrique (2) étant transférée dans le mode à régulation de couple, et l'élément de changement de vitesses à enclencher (K_neu) étant complètement fermé,
**caractérisé en ce que**
dans le cas d'un passage à une vitesse supérieure en traction, la capacité de transfert de l'embrayage à enclencher (K_neu) en vue de la reprise de charge augmente et simultanément la capacité de transfert de l'embrayage à déconnecter (K_alt) diminue, et après une reprise de charge réussie, la machine électrique (2) étant transférée par l'élément de changement de vitesses à enclencher (K_neu) dans un mode à régulation de régime, et une adaptation de régime de la machine électrique (2) étant effectuée, afin d'obtenir le régime synchrone du rapport à enclencher, de sorte que la machine électrique (2) soit amenée de manière régulée en régime jusqu'au régime cible ou au régime synchrone du nouveau rapport, et simultanément l'élément de changement de vitesses à déconnecter (K_alt) étant complètement ouvert, la capacité de transfert de l'élément de changement de vitesses à déconnecter (K_alt) étant réduite dans le cas d'un rétrogradage en traction, et dès qu'un glissement est détecté au niveau de l'élément de changement de vitesses à déconnecter (K_alt), la machine électrique (2) étant transférée du mode à régulation de couple dans un mode à régulation de régime, le régime de la machine électrique (2) étant ensuite augmenté jusqu'à un régime au-dessus du régime synchrone au niveau de l'élément de changement de vitesses à enclencher (K_neu), et dans une étape supplémentaire la capacité de transfert de l'élément de changement de vitesses à enclencher (K_neu) étant augmentée et la capacité de transfert de l'élément de changement de vitesses à déconnecter (K_alt) étant encore réduite, de sorte qu'une reprise de charge continue par l'élément de changement de vitesses à enclencher (K_neu) soit réalisée, et après une reprise de charge réussie par l'élément de changement de vitesses à enclencher (K_neu), l'élément de changement de vitesses à déconnecter (K_alt) étant complètement ouvert et le régime de la machine électrique (2) étant amené au régime synchrone au niveau de l'élément de changement de vitesses à enclencher (K_neu),
et dans le cas d'un rétrogradage en poussée, la capacité de transfert de l'élément de changement de vitesses à enclencher (K_neu) étant augmentée, et simultanément la capacité de transfert de l'embrayage à déconnecter (K_alt) étant réduite, la machine électrique (2) étant transférée après la reprise de charge par l'élément de changement de vitesses à enclencher (K_neu) depuis un mode à régulation de couple dans un mode à régulation de régime, et l'élément de changement de vitesses à déconnecter (K_alt) étant complètement ouvert, et ensuite la machine électrique (2) étant amenée de manière régulée en régime au régime synchrone, l'élément de changement de vitesses à déconnecter (K_alt) étant simultanément complètement ouvert et dans le cas d'un passage à une vitesse supérieure en poussée, la capacité de transfert de l'élément de changement de vitesses à déconnecter (K_alt) étant d'abord réduite en continu, et dès qu'un glissement est détecté au niveau de l'élément de changement de vitesses à déconnecter (K_alt), la machine électrique (2) étant transférée du mode à régulation de couple dans un mode à régulation de régime, dans lequel le régime est abaissé jusqu'à un régime en dessous du régime synchrone au niveau de l'élément de changement de vitesses à enclencher (K_neu), et ensuite la capacité de transfert de l'élément de changement de vitesses à enclencher (K_neu) étant augmentée et la capacité de transfert de l'élément de changement de vitesses à déconnecter (K_alt) étant réduite, de sorte qu'une reprise de charge continue soit réalisée par (K_neu) et après une reprise de charge réussie par l'élément de changement de vitesses à enclencher (K_neu), l'élément de changement de vitesses à déconnecter (K_alt) étant complètement ouvert et le régime de la machine électrique (2) étant amené en mode à régulation de régime au régime synchrone au niveau de l'élément de changement de vitesses à enclencher (K_neu).

2. Procédé pour effectuer un changement de vitesses en charge selon la revendication 1, **caractérisé en ce que** les couples des éléments de changement de vitesses (K_alt, K_neu) agissant sur la machine électrique (2) servent de commande pilote pour la régulation de régime au niveau de la machine électrique (2).
